# EUROPEAN PATENT SPECIFICATION

(11) **EP 2 912 822 B1**
(45) Date of publication and mention of the grant of the patent: **03.07.2019**
(21) Application number: 13795181.0
(22) Date of filing: 24.10.2013
(51) Int. Cl.: H04L 29/06

(54) **SECURITY-DEVICE AND SECURE DATA TRANSMISSION METHOD**
SICHERHEITSVORRICHTUNG UND SICHERES DATENÜBERTRAGUNGSVERFAHREN
DISPOSITIF DE SÉCURITÉ ET PROCÉDÉ DE TRANSMISSION DE DONNÉES SÉCURISÉES

(30) Priority: 24.10.2012 EP 12189839
(43) Date of publication of application: 02.09.2015
(73) Proprietor: OpenLimit SignCubes AG, 6341 Baar (CH)
(72) Inventor: LUNKEIT, Armin, 10318 Berlin (DE)
(74) Representative: Maikowski & Ninnemann Patentanwälte Partnerschaft mbB
(86) International application number: PCT/EP2013/072276
(87) International publication number: WO 2014/064197

(56) References cited:
- GB-A- 2 429 094
- GB-A- 2 430 297
- US-A1- 2008 103 972
- STEVEN J MURDOCH ET AL: "Chip and PIN is Broken", SECURITY AND PRIVACY (SP), 2010 IEEE SYMPOSIUM ON, IEEE, PISCATAWAY, NJ, USA, 16 May 2010 (2010-05-16), pages 433-446, XP031705097, ISBN: 978-1-4244-6894-2

## Description

The invention relates to a security-device according to claim 1 and a secure data transmission method according to claim 7.

It is a common task that data between communication devices needs to be exchanged. In a typical example a client-device, such as e.g. personal computers or tablet computers with an Internet browser requests data from a server system. The usual connection via the Internet is inherently insecure since unauthorized persons can modify the data transmission or tamper with the security of the client-devices.

Online banking or online shopping are examples of such typical transactions (i.e. in the form of a data transmission) that requires some sort of authentication by the user of or at the client-device. But the user of the first communication device (e.g. the client-device) and / or the user of the at least one second communication device (e.g. the server system) can never be sure that the security of the client-device has not been compromised, e.g. through the infection by a Trojan. Even though the correct authentication credential might be given at the client-device (e.g. a password, a passphrase, a PIN or a TAN), the data actually sent to the server system or received by the server system might be altered by some unauthorized means, e.g. some unauthorized software on the client-device.

A method for a secure data transmission is described in STEVEN J MURDOCH ET AL, "Chip and PIN is Broken", SECURITY AND PRIVACY (SP), 2010 IEEE SYMPOSIUM ON, IEEE, PISCATAWAY, NJ, USA, 16 May 2010, pages 433-446, ISBN 978-1-4244-6894-2.

GB 2 430 297 A shows a transaction apparatus for enacting token-less transactions.

US 2008/0103972 A1 shows a secure authentication and payment system.

GB 2 429 094 A shows a secure transaction system to counter automatic processing fraud.

Therefore, it is desirable to develop devices and methods for safe data transmissions even under uncertain safety conditions of a first communication device (e.g. a client-device) and / or communication channels.

To enable a secure data transmission between first communication device (e.g. a client-device) and at least one second communication device (e.g. a server system) with an inherently insecure data connection and / or with an inherently insecure first communication device (e.g. a client-device) a security-device comprises

a receiving means for receiving a second authentication request from the at least one second communication device (e.g. the server system) regarding a data transmission request from the first communication device (e.g. the client-device) to the at least one second communication device (e.g. the server system),
the receiving means being coupled with an output means for providing information about the data transmission request to a user,
an input means for the inputting of authentication data by the user,
a means for generating a third authentication request for the at least one second communication device (e.g. the server system) by the user at the security-device in dependence of the authentication data,
and a first connection means configured so that only predefined enable signal is receivable and / or processable by the security-device and that the third authentication request is only transmittable to the at least one second communication device (e.g. the server system), after the correct receipt of the enable signal. The predefined enable signal is to be considered an unambiguous signal.

Therefore, the data transmission between the first and the at least one second communication device requires that certain authentications are performed before the data transmission itself. The authentications are:
a) the first communication device (e.g. with an embedded security-device) in respect to the at least one second communication device (e.g. the server system),
b) from the at least one second communication device (e.g. the server system) in respect to the first communication device (e.g. the embedded security-device). This leads to a mutual authentification.
c) from the user with the security device (e.g. using a biometric interface.
d) from the user to the second communication server system, with the transmission of the electronic identity.

The user of the first communication device is authenticated by using an electronic identity that can be verified by the at least one second communication device. This results in a coupling between the authentication and the data transmission, i.e. the same channel (e.g. cryptographically secured channel) is used for the authentication and the data transmission.

The authentication of the user takes place directly to the security device. There is no need for an external device, such e.g. terminal for checking a chip card.

A difference to the prior art is the inherent user authentication at the security device. Therefore the security device is characterized by an input interface that allows the interaction between the user and the security device without - additional - external input devices, e.g. pin pad or biometric interface. The security device secures the electronic identity of the user which is used to create the binding of the channels mutually authenticated and agreed in the mutual authentication phase. The submission of the electronic identity or parts of it is granted by the users identification at the security device. The protection of the electronic identity in the security device is fulfilled by a secure storage element that will not allow any access to the electronic identity without successful user authentication. This policy of protecting the access to the secure storage is an explicit attribute of the security device.

For the authentication of the user at the security-device the user provide authentication data at the security device comprising alphanumeric data, in particular a PIN code, a secret password or passphrase only known to the user and / or biometric data, in particular a fingerprint scan and / or an iris scan. With this information the server system can be sure, that the data from the transmission request is correct and authorized by the user.

The output means comprises an alphanumeric display and or / a Braille display so that complex information can be provided for the user.

As a security measure the communication only a predefined enable signal can be processed. Therefore, the capacity of a buffer storage of the first connection means of the security-device is limited to 2 kB, in particular less than 1 kB and / or only a certain bit pattern is allowed as an input for the first connection means. The deliberate minimization of the buffer storage increases the security in this context. Typically the security device would receive a transaction ID and the address of the authentication server. More is not needed to continue the session on the second secure channel.

The secure validation input means comprises an alphanumeric keyboard, a vein scanner, a fingerprint scanner and / or an iris scanner. With these means the user can provide a secure input for the security-device.

The security-device can e.g. be used for a first data transmission request for a money transfer or an online purchase.

The security-device can comprise first connection means connectable with a personal computer, a tablet device, car, a mobile phone and / or a smartphone and / or the security device is embedded in an object such as a car.

Also a method with the following steps assures a secure data transmission, wherein,
a) a data transmission request sent from a client-device to a server system;
b) the server system sends an acknowledge request to the client-device upon receipt of the data transmission request;
c) the client-device generating a predefined enable signal to a security-device;
d) the security-device sends first authentication request to the server system,
e) upon which the server system replies with a second authentication request comprising information regarding the data transmission request which is displayed by an output mean;
f) an input means receives authentication data from a user and the authentication data at the security device comprises alphanumeric data, in particular a PIN code, a secret password or passphrase only known to the user and / or biometric data, in particular a fingerprint scan and / or an iris scan;
g) a third authentication request is sent from the security-device to the server system, the content depending on the authentication data,
wherein the capacity of a buffer storage of a first connection means of the security-device is limited to 2 kB, in particular less than 1 kB and / or only a certain bit pattern is allowed as an input for the first connection means.

The first communication device can comprise a client-device. The at least one second communication device can comprise a server system.

In a particular embodiment
a) a cryptographically secured channel is established between the security-device and the server system for mutual authentication,
b) within that channel, a second cryptographically secured channel is established using in particular a symmetric encryption,
c) within that channel an electronic identity is exchanged.

Exemplary embodiments are described in connection with the following figures in which
- Fig. 1: shows the overview of an embodiment of a security-device enabling a secure data transmission;
- Fig. 2: shows the sequence of the communication in an embodiment of the method.

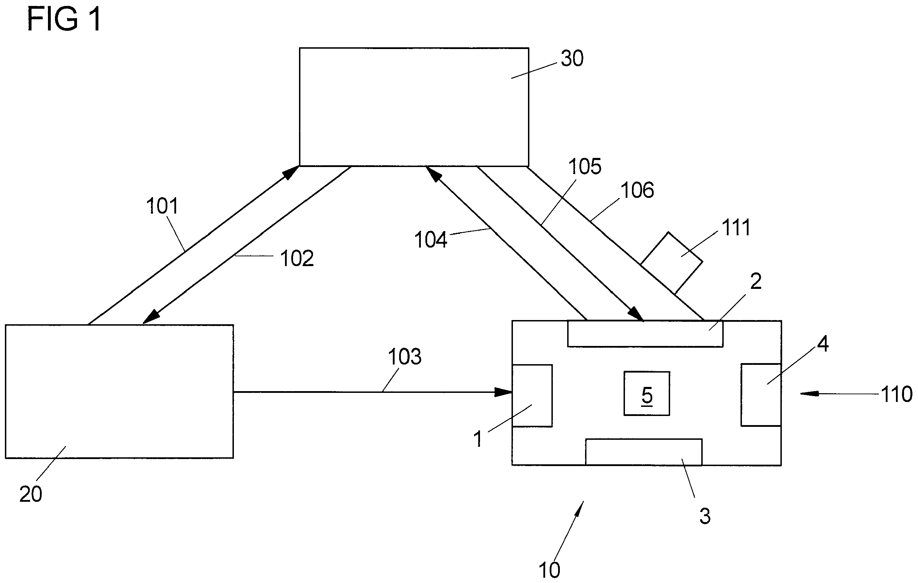

The data transmission, i.e. the data transmission (transaction) shown in Fig. 1 involves an embodiment of a security-device 10 that provides a secure communication channel between a server system 30 as a second communication device and the security-device 10. This enables - as will be discussed below - the authentication of a data transmission between a first communication device, e.g. client-device 20 and the second communication device, e.g. the server system 30. For simplicity reasons, the embodiments shown here assume only one second communication device 30, e.g. one server system 30. It is possible to use the method and the security device 10 also in the context of more than one second communication device 30. Furthermore, the term server system 30 is not limited to a computer being a server, in particular a large computer. The server system 30 could be any system that offers a service to a client-device.

In the following the first communication device 20 is a client-device to a server system being the second communication device 30.

In an exemplary situation a user wants to initiate and complete a data transmission request (transaction request) from his/her client-device 20 to the server system 30.

The client-device 20 can e.g. be a personal computer, a tablet device or a smartphone.

The requested data transmission can e.g. be an online banking session, a purchase at an Internet store or a personal registration at some service provider. Another embodiment could be a transaction in the context of a smart-grid system between a consumer of energy and a supplier. The consumer requests a service, e.g. remote maintenance from an energy supplier.

The embodiments can operate with data transmissions requiring that an authorized user initiates and / or authorizes the data transmission with the correct content (e.g. a correct amount of money or the correct account information). The term "correct" in this context implies that the correct content is the same as the content intended by the user.

In all these cases, sensitive information needs to be transmitted between the client-device 20 and the server system 30. Since the user cannot be sure that the security of the client-device 20 has not been compromised, he/she has to assume that the client-device 20 is inherently unsafe. The server system 30 cannot be sure that the request from the client-device 20 it authentic.

There is also an inherent insecurity in the data transmissions from the client-device 20 to the server system 30 that is beyond the control of the user. Therefore, this data transmission has to be considered as inherently unsafe as well.

As will be shown below, the security-device 10 opens a second, independent and inherently safe communication channel to the server system 30 that then enables the verification of the communication between the client-device 20 and the server system 30.

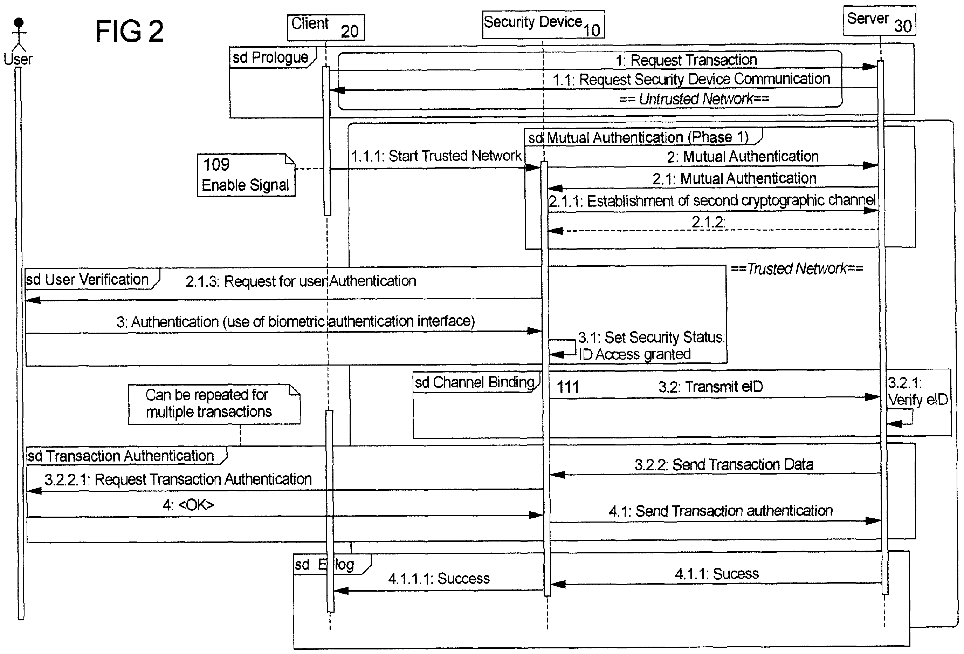

Inherently secure in this context means that the safety of the communication channel is verifiable to the used and the server system 30. This is based on the following (see also Fig. 2):
- A cryptographically secured channel between the client device 20 and the server system 30 is established (e.g. TLS).
- Within that channel (e.g. TLS), a second cryptographically secured channel is established using in particular a symmetric encryption.
- Within that channel an electronic identity is exchanged.

The enhanced security results from the coupling of the two encrypted channels. At first a protocol is used that establishes an authenticated connection which provides security against eavesdropping. In addition the second channel is established over which the data transmission takes place. An embodiment of this two-phase method is described in Fig. 2.

This legitimizes the electronic data transmission between the client-device 20 and the server system 30.

In case of the online banking example a user of the client-device 20 initiates the data transmission, i.e. a transaction on a browser running on the client-device 20. Alternatively a different program, e.g. a specialized banking program can be used. Other possible applications are e.g. a login to website of a company, a login to a service portal for external workers such as service technicians or the use of the device as an access device to a physical location rather than a computer. It is important that the client, be it through a browser or otherwise, can communicate with the Internet and receives Data from the server-system 30

In the embodiment described above, after invoking the banking platform, the user logs in by stating e.g. a user name and a password. The log in procedure can comprise different or additional input data.

The user then fills in a transaction form, i.e. a form in which e.g. recipient, the transferred amount and banking details are specified.

The user then sends this data as a data transmission form request 101 to the server system 30, running a portal for the transaction form. Upon receipt by the server system 30 the data is acknowledged e.g. by sending a link as an acknowledge signal 102 to the browser running on the client-device 20.

The user then clicks on the provided link that automatically triggers a predetermined enable-signal 103 to the security-device 10. In an embodiment the triggering is effected by a Browser Plugin. In case that the link is shown in the Browser a dedicated protocol can be used (e.g. olsc://securedevice/login). This protocol is executed via a separate protocol handler. The Browser Plugin is to be understood only as an example. The same functionality can be achieved by some dedicated software.

The security-device 10 is in the possession of the user of the client-device 20 and it is coupled with the client-device 20. This coupling implies that only a predefined minimal data transmission between the client-device 20 and the security-device 10 is possible. The enable signal 103 is received by a first connection means 1 of the security-device 10.

The security-device 10 can be programmed in software or built into hardware. It is also possible that the security-device 10 comprises hardware and software means, as e.g. the output and input means 3, 4 and the connection means 1, 2.

The security-device 10 is configured to handle only the predefined enable-signal 103 from the client-device 20. The minimality of the data transmission can be realized in many ways and in combinations. In the extreme the enable-signal 103 can comprise only one bit. It is also possible to limit the buffer storage capacity of the first connection means 1 of the security-device 10. Another possibility is that only a certain bit pattern is allowed to as an input for the first connection means 1.

After a positive processing result of the enable-signal 103 by the security-device 10 a secure data connection is established between the server system 30 and the security-device 10 over a separate channel. The security of the channel can be e.g. assured by using the EAC-Protocol (Technical Guideline 3110). On the security-device 10 the communication with the server-system 30 is handled by a second connection means 2.

A first authentication request 104 is sent from the second communications means 2 of the security-device 10 to the server system 30.

A second authentication request 105 is sent from the server system 30 to second communications means 2 of the security-device 10 comprising the data provided by the user of the client-device 20. At least some data from the data transmission request 101 is transmitted from the server system 30 in the second authentication request 105. This could e.g. be the amount of money requested to be transferred. The data received by security-device 10 in the second authentication request 105 is displayed on an output means 3 of the security-device 10. In the described embodiment the output means 3 comprise a numerical display that can display the amount of money and /or banking account information involved in the data transmission request 101.

Upon the correct display of this information the user can authenticate the data (e.g. the amount is correct, the account information is correct) by providing some authentication data 110 to an input means 4 of the security-device 10. The authentication can involve alphanumeric data (e.g. a PIN code, secret password or passphrase only known to the user etc.) and / or biometric data (e.g. a fingerprint scan, an iris scan etc.) and / or a secret password only known to the user.

The input of the authentication data 110 triggers a third authentication request 106 that is sent from the security-device 10 to the server system 30. This third authentication request 106 is coupled with an electronic certificate 111 which can be verified by the server system 30.

The electronic identity is generated by a processor means 5 of the security-device 10. The submitted electronic identity is an xml token which is digitally signed. The xml structure contains identity information which may be required by the server for successful identification of the user. The electronic certificate 111 protects the electronic identity by means of a digital signature. The electronic certificate 111 allows the server to verify the authenticity of the submitted electronic identity.

After a positive verification of the third authentication request 106 the server-system 30 it further processed, i.e. the data transmission request 101 of the client-device 20 is approved. In case of a negative verification result of the third authentication request 106 the requested data transmission is denied.

By using the second secure channel for transmitting the third authentication request 106 it is assured that the data transmission request 101 is genuine. If e.g. a Trojan or a virus has compromised the security of the client-device 20 it would have been possible that the data actually sent to the server system 30 is altered. The Trojan could have changed e.g. the banking details so that amount is transferred to a different account. Since the first connection means of the security-device 10 only allows a very minimal data transmission from the client-device 20 there is no risk of compromising the security, i.e. the Trojan spreading to the security-device 10. The security-device 10 receives predefined information in a very limited form insulating it against attacks.

It should be noted that all or some of the devices mentioned can be realized in software or hardware.

The first communication device 20 can be embedded together with the security device 10. Together they then form a security system. One possible embodiment of this kind would be a first communication device 20 (with an embedded security device 10) such as mobile telephone, which is connected via a shortrange communication (e.g. WiFi, Bluetooth), a USB connection and / or an Ethernet link with a personal computer. In another embodiment the security device 10 would be embedded in a real world object, such e.g. a car or a unit in an industrial context (e.g. a machine which automatically requests some services from a server system 30). The security device 10 would then be connected to the multimedia and / or communication system of the car.

In principle a client-device 20 can by a typical PC or any Hardware / Software application (like embedded devices used in cars). Typically such client-devices use IP-based communication networks.

An example for a security device 10 is a hardware / software unit in an embedded system comprising physical and / or logical protection means for a stored electronic ID. This can be e.g. realized as a mobile device with an authentication interface and a secure memory unit for the electronic ID. Such a device could e.g. be embedded into a car or into industrial units.

In Fig. 2 an exemplary communication involving a user with a client-device 20 and a server system 30 is described.

The user who has access to the client-device 20 initiates the communication with step 1., i.e. a request for a transaction or a transmission request 101 (step 1. in Fig.2). The server system 30 replies with a request for a security device communication (step 1.1 in Fig. 2). All this communication takes place in an inherently insecure or untrusted network. In Fig. 2 this phase is called the Prologue.

All the following steps take place in a trusted network, i.e. beginning with the enable signal 103.

Phase 1 is the mutual authentication between the security device 10 and the server system 30. The enable signal 103 is starting trusted network communication. This results in the establishment of a cryptographically secured channel between the client device 20 and the server system 30 (steps 2, 2.1 in Fig. 2). Then within that channel, a second cryptographically secured channel is established using in particular a symmetric encryption (steps 2.1.1, 2.1.2 in Fig. 2). The dotted line indicates a return message. At the end both sides are in the possession of the same symmetric key.

Thereby, mutual authentication is achieved and a trusted network is created (step 2.1.1 in Fig. 2) between the client-device 20 and the server system 30. In the second phase within that channel an electronic identity is exchanged (boxes "User verification", "Channel binding" in Fig. 2).

The user has to go through an identification process. First the user receives a request for entering his / her ID (step 2.1.3) (e.g. authentication credentials) from the security device 10. The user then performs the authentication using one of the above described methods, e.g. a PIN or a Biometric identification (step 3 in Fig. 2) into the input means 4 of the security-device 20.

If successful (step 3.1 in Fig. 2), the means for generating a third authentication request 106, i.e. the transmission of an eID (electronic ID) to the server system 30 is triggered in dependence of the authentication data. This is also termed channel binding.

If the client device 20 is e.g. a chip card and the server system 30 a card reading terminal, the electronic identity (eID in Fig. 2) is send from the security device 10 to the server system 30. Therefore, the user is authenticated by the server system as well. Without that authentication, the transaction will not take place. The server system 30 obtains a proof of identity that can be verified by the server system itself.

In effect, there are two verifications: one between the security device 10 and the client device 20, the other between the security device 10 and the server system 30. The server system 30 verifies the eID (step 3.2.1 in Fig. 2). If successful, the transaction requested by the user is sent to the security-device 10 (step 3.2.2 in Fig. 2). In turn the security-device 10 requests a transaction authentification from the user (step 3.2.2.1 in Fig. 2).

The OK of the user is transmitted via the security-device 10 to the server system 30 (steps 4, 4.1 in Fig. 2). At last the requested resource is transmitted to the client-device 20 (steps 4.1.1, 4.1.1.1 in Fig. 2).

Fig. 2 shows that all communication involving the security-device 10 takes place in a trusted network.
- 1: First connection means (connection between client-device and security-device)
- 2: Second connection means (connection between server system and security-device)
- 3: Output means
- 4: Input means
- 5: Processor means

- 10: Security-device
- 20: first communication device, client-device
- 30: second communication device, server system

- 101: Data transmission request (client-device from server system)
- 102: Acknowledge signal (server system to client-device)
- 103: Enable signal (from client-device to security-device)
- 104: First authentication request (security-device to server system)
- 105: Second authentication request (server system to security-device)
- 106: Third authentication request (security-device to server system)

- 110: Authentication data (user to security-device)
- 111: Electronic certificate

## Claims

1. Security-device (10) for enabling a secure data transmission between a first communication device (20) and at least one second communication device (30) over an inherently insecure data connection and / or with the first communication device (20) being inherently insecure, comprising
a receiving means (2) for receiving a second authentication request (105) from the at least one second communication device (30) regarding a data transmission request (101) from the first communication device (20) to the at least one second communication device (30),
the receiving-means (2) being coupled with an output means (3) for providing information about the data transmission request (101) to a user,
an input means (4) for the inputting of authentication data (110) by the user,
a means for generating a third authentication request (106) for the at least one second communication device (30) by the user at the security-device (10) in dependence of the authentication data (110),
and a first connection-means (1) configured so that only a predefined enable signal (103) is receivable and / or processable by the security-device (10) and that the third authentication request (106) is only transmittable to the at least one second communication device (30), after the correct receipt of the enable signal (103) and
wherein the authentication data (110) at the security device comprises alphanumeric data, in particular a PIN code, a secret password or passphrase only known to the user and / or biometric data, in particular a fingerprint scan and / or an iris scan
**characterized in that**
the capacity of a buffer storage of the first connection means (1) of the security-device (10) is limited to 2 kB, in particular less than 1 kB and / or only a certain bit pattern is allowed as an input for the first connection means (1).

2. Security-device according to claim 1, wherein the first communication device (20) comprises a client-device.

3. Security-device according to claim 1 or 2, wherein the at least one second communication device (30) comprises a server system (30).

4. Security-device according to at least one of the preceding claims, wherein the output means (3) comprises an alphanumeric display and or / a Braille display.

5. Security-device according to at least one of the preceding claims, wherein the input means (4) comprises an alphanumeric keyboard, a vein scanner, a fingerprint scanner and / or an iris scanner.

6. Security-device according to at least one of the preceding claims, wherein the first connection means (1) is connectable with a personal computer, a tablet device, car, a mobile phone and / or a smartphone and / or the security device (10) is embedded in an object such as a car.

7. Method for a secure data transmission, wherein,
a) a data transmission request (101) sent from a first communication device (20) to at least one second communication device (30);
b) the at least one second communication device (30) sends an acknowledge request to the first communication device (20) upon receipt of the data transmission request (101);
c) the first communication device (20) generating a predefined enable signal (103) to a security-device (10);
d) the security-device (10) sends first authentication request (104) to the at least one second communication device (30),
e) upon which the at least one second communication device (30) replies with a second authentication request (105) comprising information regarding the data transmission request (101) which is displayed by an output means (3);
f) an input means (4) receives authentication data (110) from a user and the authentication data (110) at the security device comprises alphanumeric data, in particular a PIN code, a secret password or passphrase only known to the user and / or biometric data, in particular a fingerprint scan and / or an iris scan,
g) a third authentication request (106) is sent from the security-device (10) to the second communication device (30), the content depending on the authentication data (110),
the security-device (10) comprises a first connection-means (1) configured so that only the predefined enable signal (103) is receivable and / or processable by the security-device (10), and **characterized in that** the capacity of a buffer storage of the first connection means (1) of the security-device (10) is limited to 2 kB,
in particular less than 1 kB and / or only a certain bit pattern is allowed as an input for the first connection means (1).

8. Method according to claim 7, wherein the first communication device (20) comprises a client-device.

9. Method according to claim 7 or 8, wherein the at least one second communication device (30) comprises a server system (30).

10. Method according to at least one of the claims 7 to 9, wherein
a) a cryptographically secured channel is established between the first communication device (20) and the second communication device (30),
b) within that channel, a second cryptographically secured channel is established using in particular a symmetric encryption,
c) within that channel an electronic identity is exchanged.

## Patentansprüche

1. Sicherheitsvorrichtung (10) zum Ermöglichen einer sicheren Datenübertragung zwischen einer ersten Kommunikationsvorrichtung (20) und mindestens einer zweiten Kommunikationsvorrichtung (30) über eine naturgemäß unsichere Datenverbindung und/oder, wenn die erste Kommunikationsvorrichtung (20) naturgemäß unsicher ist, umfassend:
ein Empfangsmittel (2) zum Empfangen einer zweiten Authentifizierungsanforderung (105) von der mindestens einen zweiten Kommunikationsvorrichtung (30) hinsichtlich einer Datenübertragungsanforderung (101) von der ersten Kommunikationsvorrichtung (20) an die mindestens eine zweite Kommunikationsvorrichtung (30),
wobei das Empfangsmittel (2) gekoppelt ist mit einem Ausgabemittel (3), um einem Benutzer Informationen über die Datenübertragungsanforderung (101) bereitzustellen, einem Eingabemittel (4) zum Eingeben von Authentifizierungsdaten (110) durch den Benutzer,
einem Mittel zum Erzeugen einer dritten Authentifizierungsanforderung (106) für die mindestens eine zweite Kommunikationsvorrichtung (30) durch den Benutzer in der Sicherheitsvorrichtung (10) in Abhängigkeit von den Authentifizierungsdaten (110),
und einem ersten Verbindungsmittel (1), das so ausgelegt ist, das nur ein vordefiniertes Freigabesignal (103) empfangbar und/oder durch die Sicherheitsvorrichtung (10) verarbeitbar ist und dass die dritte Authentifizierungsanforderung (106) nur nach dem korrekten Empfang des Freigabesignals (103) zu der mindestens einen zweiten Kommunikationsvorrichtung (30) sendbar ist, und
wobei die Authentifizierungsdaten (110) in der Sicherheitsvorrichtung alphanumerische Daten umfassen, insbesondere einen PIN-Code, ein geheimes Passwort oder eine geheime Passphrase, das bzw. die nur dem Benutzer bekannt ist, und/oder biometrische Daten, insbesondere einen Fingerabdruckscan und/oder einen Irisscan,
**dadurch gekennzeichnet, dass**
die Kapazität einer Pufferspeicherung des ersten Verbindungsmittels (1) der Sicherheitsvorrichtung (10) auf 2 kB begrenzt ist, insbesondere auf weniger als 1 kB, und/oder nur ein bestimmtes Bitmuster als Eingabe für das erste Verbindungsmittel (1) erlaubt ist.

2. Sicherheitsvorrichtung nach Anspruch 1, wobei die erste Kommunikationsvorrichtung (20) eine Client-Vorrichtung umfasst.

3. Sicherheitsvorrichtung nach Anspruch 1 oder 2, wobei die mindestens eine zweite Kommunikationsvorrichtung (30) ein Serversystem (30) umfasst.

4. Sicherheitsvorrichtung nach mindestens einem der vorhergehenden Ansprüche, wobei das Ausgabemittel (3) eine alphanumerische Anzeige und/oder eine Braille-Anzeige umfasst.

5. Sicherheitsvorrichtung nach mindestens einem der vorhergehenden Ansprüche, wobei das Eingabemittel (4) eine alphanumerische Tastatur, einen Venenscanner, einen Fingerabdruckscanner und/oder einen Irisscanner umfasst.

6. Sicherheitsvorrichtung nach mindestens einem der vorhergehenden Ansprüche, wobei das erste Verbindungsmittel (1) mit einem Personal Computer, einer Tablet-Vorrichtung, einem Auto, einem Mobiltelefon und/oder einem Smartphone verbindbar ist und/oder die Sicherheitsvorrichtung (10) in ein Objekt wie ein Auto eingebettet ist.

7. Verfahren zur sicheren Datenübertragung, wobei
a) eine Datenübertragungsanforderung (101) von einer ersten Kommunikationsvorrichtung (20) zu mindestens einer zweiten Kommunikationsvorrichtung (30) gesendet wird;
b) die mindestens eine zweite Kommunikationsvorrichtung (30) bei Empfang der Datenübertragungsanforderung (101) eine Bestätigungsanforderung zu der ersten Kommunikationsvorrichtung (20) sendet;
c) die erste Kommunikationsvorrichtung (20) ein vordefiniertes Freigabesignal (103) an eine Sicherheitsvorrichtung (10) erzeugt;
d) die Sicherheitsvorrichtung (10) die erste Authentifizierungsanforderung (104) zu der mindestens einen zweiten Kommunikationsvorrichtung (30) sendet,
e) woraufhin die mindestens eine zweite Kommunikationsvorrichtung (30) mit einer zweiten Authentifizierungsanforderung (105) antwortet, die Informationen hinsichtlich der Datenübertragungsanforderung (101) umfasst, die durch ein Ausgabemittel (3) angezeigt werden;
f) ein Eingabemittel (4) Authentifizierungsdaten (110) von einem Benutzer empfängt und die Authentifizierungsdaten (110) in der Sicherheitsvorrichtung alphanumerische Daten umfassen, insbesondere einen PIN-Code, ein geheimes Passwort oder eine geheime Passphrase, das bzw. die nur dem Benutzer bekannt ist, und/oder biometrische Daten, insbesondere einen Fingerabdruckscan und/oder einen Irisscan,
g) eine dritte Authentifizierungsanforderung (106) von der Sicherheitsvorrichtung (10) zu der zweiten Kommunikationsvorrichtung (30) gesendet wird, wobei der Inhalt von den Authentifizierungsdaten (110) abhängt, die Sicherheitsvorrichtung (10) ein erstes Verbindungsmittel (1) umfasst, das so ausgelegt ist, dass nur das vordefinierte Freigabesignal (103) empfangbar und/oder durch die Sicherheitsvorrichtung (10) verarbeitbar ist, und
**dadurch gekennzeichnet, dass**
die Kapazität einer Pufferspeicherung des ersten Verbindungsmittels (1) der Sicherheitsvorrichtung (10) auf 2 kB begrenzt ist, insbesondere auf weniger als 1 kB, und/oder nur ein bestimmtes Bitmuster als Eingabe für das erste Verbindungsmittel (1) erlaubt ist.

8. Verfahren nach Anspruch 7, wobei die erste Kommunikationsvorrichtung (20) eine Client-Vorrichtung umfasst.

9. Verfahren nach Anspruch 7 oder 8, wobei die mindestens eine zweite Kommunikationsvorrichtung (30) ein Serversystem (30) umfasst.

10. Verfahren nach mindestens einem der Ansprüche 7 bis 9, wobei
a) ein kryptographisch gesicherter Kanal zwischen der ersten Kommunikationsvorrichtung (20) und der zweiten Kommunikationsvorrichtung (30) hergestellt wird,
b) in diesem Kanal unter Verwendung insbesondere einer symmetrischen Verschlüsselung ein zweiter kryptographisch gesicherter Kanal hergestellt wird,
c) in diesem Kanal eine elektronische Identität ausgetauscht wird.

## Revendications

1. Dispositif de sécurité (10) pour permettre une transmission de données sécurisée entre un premier dispositif de communication (20) et au moins un deuxième dispositif de communication (30) sur une connexion de données intrinsèquement non sécurisée et/ou avec le premier dispositif de communication (20) qui est intrinsèquement non sécurisé, comprenant
un moyen de réception (2) pour recevoir une deuxième demande d'authentification (105) de l'au moins un deuxième dispositif de communication (30) concernant une demande de transmission de données (101) du premier dispositif de communication (20) vers l'au moins un deuxième dispositif de communication (30),
le moyen de réception (2) étant couplé à un moyen de sortie (3) pour fournir des informations concernant la demande de transmission de données (101) à un utilisateur,
un moyen de saisie (4) pour la saisie de données d'authentification (110) par l'utilisateur,
un moyen pour générer une troisième demande d'authentification (106) pour l'au moins un deuxième dispositif de communication (30) par l'utilisateur au niveau du dispositif de sécurité (10) en fonction des données d'authentification (110),
et un premier moyen de connexion (1) configuré de sorte que seul un signal d'activation prédéfini (103) puisse être reçu et/ou traité par le dispositif de sécurité (10) et que la troisième demande d'authentification (106) ne puisse être transmise à l'au moins un deuxième dispositif de communication (30), qu'après la réception correcte du signal d'activation (103) et
dans lequel les données d'authentification (110) au niveau du dispositif de sécurité comprennent des données alphanumériques, en particulier un code PIN, un mot de passe secret ou une phrase secrète uniquement connus de l'utilisateur et/ou des données biométriques, en particulier un balayage d'empreintes digitales et/ou un balayage de l'iris
**caractérisé en ce que**
la capacité d'une mémoire tampon du premier moyen de connexion (1) du dispositif de sécurité (10) est limitée à 2 ko, en particulier inférieure à 1 ko et/ou seulement un certain motif binaire est autorisé en tant que saisie pour le premier moyen de connexion (1).

2. Dispositif de sécurité selon la revendication 1, dans lequel le premier dispositif de communication (20) comprend un dispositif client.

3. Dispositif de sécurité selon la revendication 1 ou 2, dans lequel l'au moins un deuxième dispositif de communication (30) comprend un système serveur (30).

4. Dispositif de sécurité selon au moins l'une des revendications précédentes, dans lequel le moyen de sortie (3) comprend un dispositif d'affichage alphanumérique et/ou un dispositif d'affichage Braille.

5. Dispositif de sécurité selon au moins l'une des revendications précédentes, dans lequel le moyen de saisie (4) comprend un clavier alphanumérique, un scanner de veine, un scanner d'empreintes digitales et/ou un scanner d'iris.

6. Dispositif de sécurité selon au moins l'une des revendications précédentes, dans lequel le premier moyen de connexion (1) peut être connecté à un ordinateur personnel, une tablette, une voiture, un téléphone portable et/ou un smartphone et/ou le dispositif de sécurité (10) est incorporé dans un objet tel qu'une voiture.

7. Procédé pour une transmission de données sécurisée, dans lequel
a) une demande de transmission de données (101) est envoyée par un premier dispositif de communication (20) à au moins un deuxième dispositif de communication (30) ;
b) l'au moins un deuxième dispositif de communication (30) envoie une demande d'accusé de réception au premier dispositif de communication (20) à la réception de la demande de transmission de données (101) ;
c) le premier dispositif de communication (20) génère un signal d'activation prédéfini (103) à destination d'un dispositif de sécurité (10) ;
d) le dispositif de sécurité (10) envoie une première demande d'authentification (104) à l'au moins un deuxième dispositif de communication (30),
e) à la suite de quoi l'au moins un deuxième dispositif de communication (30) répond par une deuxième demande d'authentification (105) comprenant des informations concernant la demande de transmission de données (101) qui sont affichées par un moyen de sortie (3) ;
f) un moyen de saisie (4) reçoit des données d'authentification (110) d'un utilisateur et les données d'authentification (110) au niveau du dispositif de sécurité comprennent des données alphanumériques, en particulier un code PIN, un mot de passe secret ou une phrase secrète uniquement connus de l'utilisateur et/ou des données biométriques, en particulier un balayage d'empreintes digitales et/ou un balayage de l'iris,
g) une troisième demande d'authentification (106) est envoyée du dispositif de sécurité (10) à l'au moins un deuxième dispositif de communication (30), le contenu dépendant des données d'authentification (110), le dispositif de sécurité (10) comprenant un premier moyen de connexion (1) configuré de sorte que seul le signal d'activation prédéfini (103) puisse être reçu et/ou traité par le dispositif de sécurité (10), et
**caractérisé en ce que**
la capacité d'une mémoire tampon du premier moyen de connexion (1) du dispositif de sécurité (10) est limitée à 2 ko, en particulier inférieure à 1 ko et/ou seulement un certain motif binaire est autorisé en tant que saisie pour le premier moyen de connexion (1).

8. Procédé selon la revendication 7, dans lequel le premier dispositif de communication (20) comprend un dispositif client.

9. Procédé selon la revendication 7 ou 8, dans lequel l'au moins un deuxième dispositif de communication (30) comprend un système serveur (30).

10. Procédé selon au moins l'une des revendications 7 à 9, dans lequel
a) un canal sécurisé par cryptographie est établi entre le premier dispositif de communication (20) et le deuxième dispositif de communication (30),
b) dans ce canal, un deuxième canal sécurisé par cryptographie est établi en utilisant en particulier un cryptage symétrique,
c) dans ce canal, une identité électronique est échangée.
